# EUROPEAN PATENT SPECIFICATION

(11) **EP 3 928 048 B1**
(45) Date of publication and mention of the grant of the patent: **07.06.2023**
(21) Application number: 19720149.4
(22) Date of filing: 21.02.2019
(51) Int. Cl.: F27B 1/20, F27D 3/00, F27D 3/10

(54) **SYSTEM FOR CONVEYING AND DISTRIBUTING LIMESTONE IN VERTICAL FURNACES**
FÖRDER- UND VERTEILUNGSSYSTEM FÜR KALKSTOFF IN VERTIKALEN ÖFEN
SYSTÈME POUR TRANSPORTER ET DISTRIBUER DE LA PIERRE À CHAUX DANS DES FOURS VERTICAUX

(43) Date of publication of application: 29.12.2021
(73) Proprietor: Qualical International Srl, 20124 Milano (IT)
(72) Inventor: CELLA, Francesco, 20124 Milano (IT)
(74) Representative: Bruni, Giovanni
(86) International application number: PCT/IT2019/000014
(87) International publication number: WO 2020/170277

(56) References cited:
- WO-A1-95/34689
- US-A- 3 801 472
- US-A- 5 046 908

## Description

### Technical field of the invention

The present invention relates to an innovative limestone loading system in industrial processes, in particular in vertical furnaces (with one or more vats) for the production of lime.

### Known art

As known, the correct conveying and distribution of limestone in pieces inside a vertical lime kiln, is a determining factor for a homogeneous cooking of the material and for an excellent quality of the finished product.

A plurality of systems (both static and dynamic) are currently known and normally used: some of them are mainly able to improve the distribution of limestone stones in order to cover in a homogeneous way the furnace section, and other systems are also able to avoid segregation of the material in pieces, namely to prevent separation and lack of homogeneity among large and small stones. Such examples could be found in US 3 801 472 A, US 5 046 908 A and WO 95/34689 A1.

For example, in the static loading systems through which limestone is generally brought to a height by a vertical elevator, skip or conveyor belt, stones are directed by means of slides and valves in one or more vats of the furnace. Such systems, which are rather simple from the point of view of plant engineering, involve a rather important segregation of the pieces according to their dimension, especially in furnaces with a large section. In hybrid systems, the material is conveyed in one or more vats through the use of slides, valves and fixed or mobile distribution and conveying plates. In this way a good coverage of the vat surface is obtained, but the segregation of the pieces according to their dimension is not prevented.

Finally, in the movable and dynamic systems of known art, buckets, "skip" or rotary hoppers are used, which are filled during rotation. Such movement permits to mix the limestone in pieces, by trying to avoid segregation, before a vertical and direct discharge occurs in the vat. Such SYSTEMS are more complex from the construction point of view and do not permit a control of the conveying and distribution of pieces according to their dimension, along the vat section.

As already mentioned, the correct loading system of limestone inside a vertical furnace, is one of the most important aspects for the preparation of lime, especially when the pieces may be fine and/or very variable in size. Also cost, encumbrance and height of the plant must be considered, as also ease of installation, calibration and programming. Moreover, limestone and raw materials are critical from a chemical and mechanical point of view, so that the choice of a loading system which can reduce the stress of the stones during conveying them, and the consequent crumbling with fine material production, becomes very important and strategic.

There is therefore a need to obtain an efficient system, which allows to solve the technical problem mentioned above and is able to control the load and size of pieces of incoming raw material, especially in critical industrial environments, such as those of regenerative furnaces with two or more vats for limestone cooking.

### Summary of the invention

Purpose of the present invention of appended claim 1 is to produce a system for loading limestone for vertical lime kilns which due to its rotation on the vertical axis of its loading hopper and the parametric control of an engine driven by the inverter, permits to accurately position the hopper and to unload the limestone in the vat of the furnaces, with different angles from cycle to cycle, by controlling the segregation of pieces at each loading step, thus being able to ensure a completely uniform distribution of the pieces inside the furnace volume, according to the independent claim of the annexed system.

A further purpose relates to the possibility either of moving, in regenerative furnaces with two or more vats, the hopper from a vat to another one of the furnace, or from a furnace to another one (in case of one or more batteries of vertical furnaces with single vat), through a rack-and-pinion translation system. In particular, for large and modern regenerative furnaces with vats, with a double material inlet for each vat, such system (including two limestone conveyor and distribution hoppers) permits loading the raw material needed for each cooking cycle, alternatively at 100% in the same vat or at 50% in both vats. Due to the engine driven by an inverter and the control with an absolute encoder, the hopper can be positioned with extreme precision on the vat to be loaded.

Advantageously, such configuration allows to have a single loading point of the hopper (through a "skip", a bucket elevator or a conveyor belt), so avoiding the installation of additional machinery and simplifying the loading configuration of the furnace.

A further advantage of the subject system of the present invention, due to the use of a double plate discharge valve, consists in being able to project the limestone in the desired direction (by opening both or partially individual plates) inside the vat, by properly and homogeneously covering the furnace section. Moreover, such type of valve allows a handling of the plates (in contrast to the most commonly used conical valves) by means of hydraulic cylinders installed externally to the valve itself, which simplifies installation, maintenance and allows more space within the hopper. In addition, the inside of the hopper and the valve is coated with high-strength rubber panels, which reduce the impact force of the incoming material, by reducing the formation of fines and noise.

Advantageously, the machine still in construction phase allows the use of electrical and hydraulic plants, in order to simplify the plant connection and commissioning.

Finally, the machine is parameterized and programmed directly during the construction phase, with the need to configure just simple basic operations at the time of installation in the plant.

According to a further aspect of the present invention, a method is described for the distribution of the limestone according to size, in lime kilns by means of the object system of the present invention, having the features set forth in the independent annexed method claim.

Further preferred and/or particularly advantageous embodiments of the invention are described according to the characteristics set forth in the attached dependent claims.

### Brief description of the drawings

The invention will now be described with reference to the accompanying drawings, which illustrate some nonlimiting embodiments thereof, in which:
- Figure 1 is a side view of the system according to the present invention,
- Figure 2 is a horizontal section of the system of Fig. 1 ,
- Figure 3 is a cross-section of the system of Fig.1 ,
- Figure 4 is an axonometric view of the system of Fig. 1,
- Figures 5A, 5B and 5C show a schematic representation of the system in a working phase,
- Figure 6 shows a schematic representation of the system, in a two-vat regenerative lime kiln,
- Figures 7A and 7B show a schematic representation of the system according to Fig.6, with double material inlet on each vat.

### Detailed description

The invention relates to a limestone loading system for vertical lime kilns, as shown in the attached Figures.

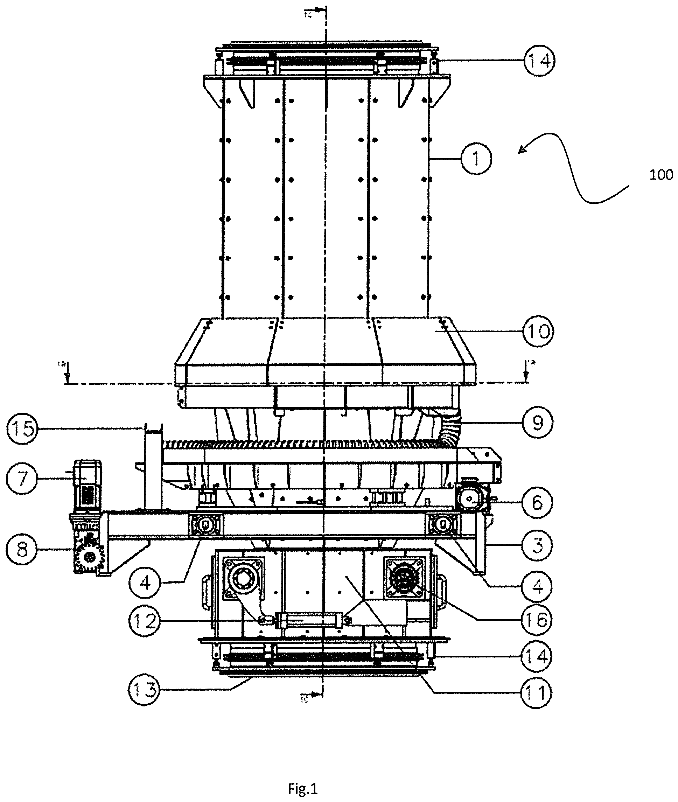

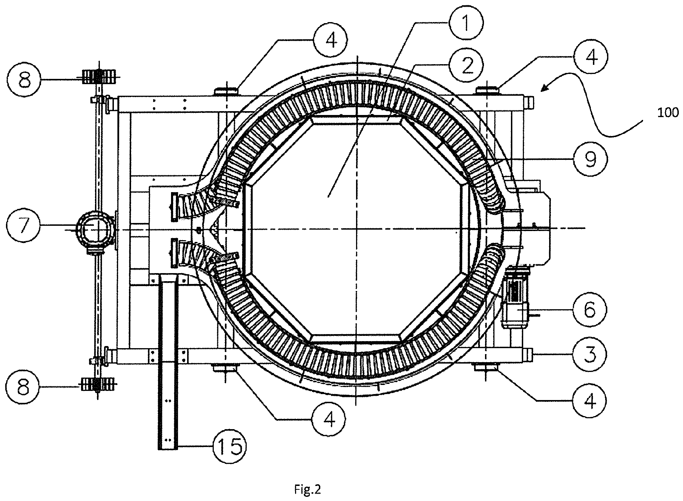

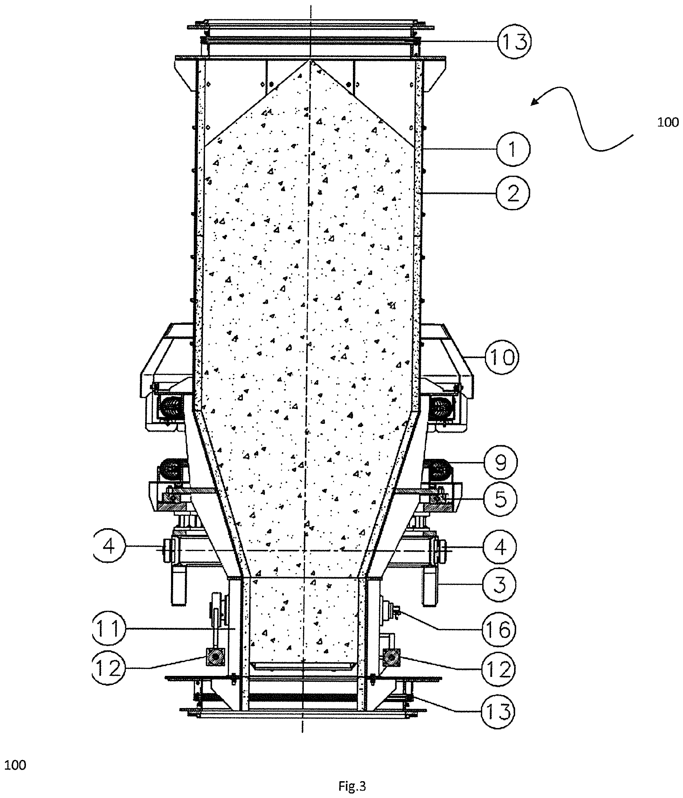

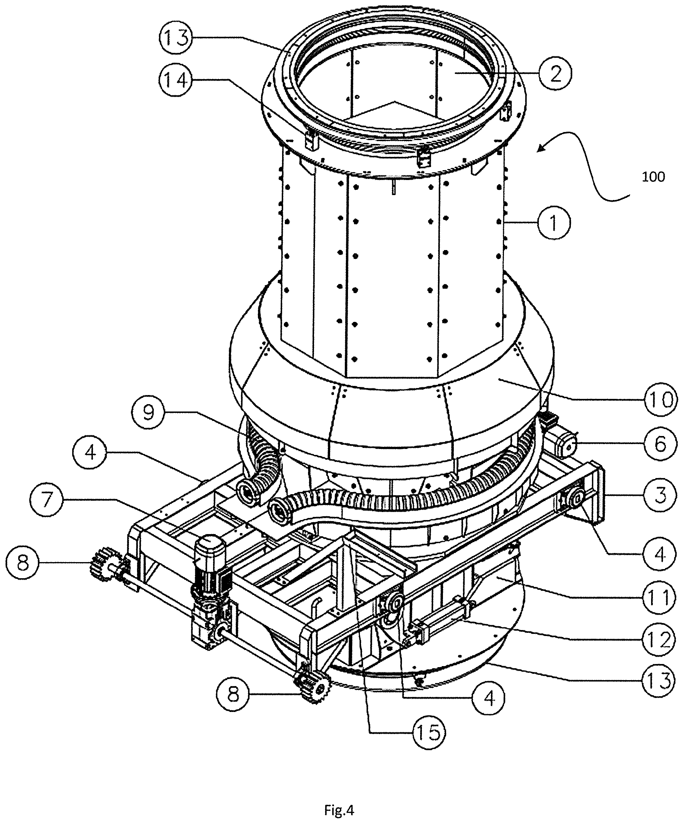

The system 100, as shown in the various views of Figures 1-4, comprises:
- a hopper 1 for receiving the material, internally coated with impact-resistant rubber/polyurethane panels 2,
- a support structure 3, provided with wheels for linear displacement on a rail 4, on which the hopper 1 is fixed by means of a wheel 5 that allows its rotation on the vertical axis,
- two motor-geared reducers 6, 7 completed with parking brake and encoder, which allow the rotation of the hopper 1 on vertical axis, and movement on a rail with rack 26. The first motor-geared reducer 6 allows to carry out the rotation of the hopper 1, by means of a pinion which meshes with the wheel 5;the second motor-geared reducer 7 allows the linear movement by means of a pair of pinions 8, which geared to a rack 26,
- a pair of tubular catenaries 9 for the passage of electric cables and hydraulic piping, protected by a system of rotating carter 10,
- a valve 11 provided with a pair of plates 11', 11", being flanged with the hopper 1; the plates 11', 11"in the closed position of the valve are arranged so that their distal ends, with respect to the valve 11 are in contact by ensuring sealing. In the opening phase, one or both plates 11', 11" can rotate about a fulcrum coincident with their proximal end. The opening of the plates 11', 11" is controlled by a pair of oleo-dynamic cylinders 12,
- a pair of dust-sealing bellows 13, controlled by short stroke hydraulic cylinders 14,
- a metal guide 15 to bring electric cables and hydraulic pipes to an external linear catenary,
- a pair of inclination meters 16 for the control of opening angle α of the pair of discs 11', 11" of the valve 11, and
- a pair of limit switches to verify the "zero" position of the hopper 1.

Advantageously, the inside of the double-plate valve 11a is also coated with rubber panels and/or impact-resistant polyurethane 2.

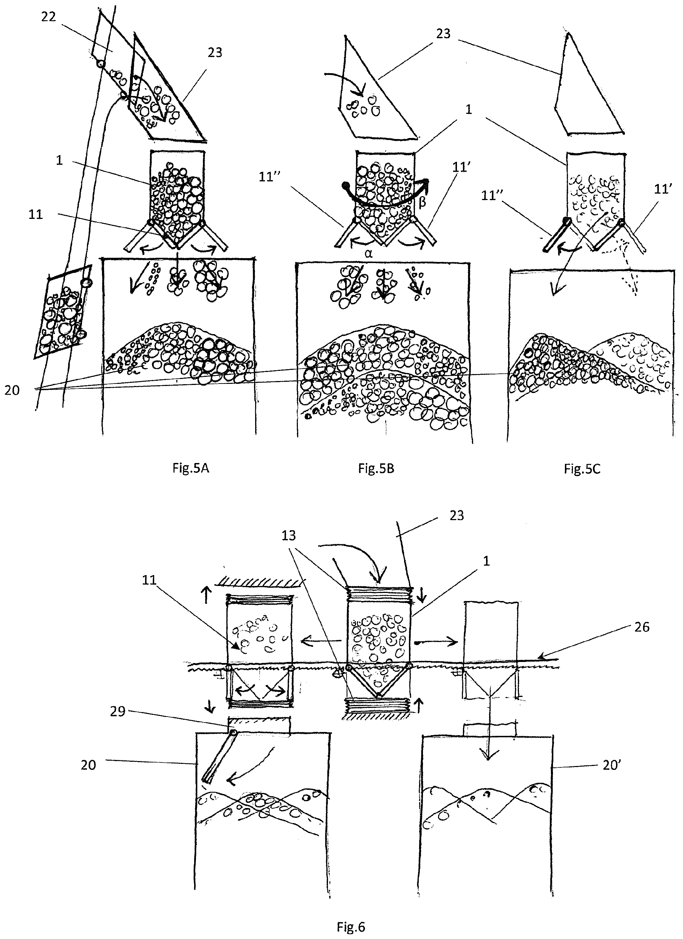

According to prior art, the operation of the system 100 in a lime kiln, for example with a single vat 20, as schematically shown in Figures 5A, 5B and 5C, is made according to following main steps :
a. raising the limestone in pieces according to size, atop of the lime kiln, by means of a bucket of a lifting system 22 or conveyor belt or bucket elevator,
b. loading the material, through a conveying slide 23, into the hopper 1,
c. directing at least one plate 11, 11' of the valve 11 and discharging the material from the hopper 1 into the vat 20 of the lime kiln.

In this way, obviously the limestone inside the vat 1 will be arranged randomly and in any case non-homogeneously.

The present invention provides for a control of the angular position of the hopper 1, in order to overcome the present drawback.

In fact, in the subsequent loading cycle of the furnace 20, the limestone will be introduced into the hopper 1, still with the same segregation and lack of homogeneity due to the different trajectory that the various pieces of limestone take in the conveying device (the larger particles will tend to reach further with respect to the smaller ones).

According to the invention, however, before the introduction of the material inside the furnace, the hopper 1 will be placed at an angle β between 0° and 180° (as shown in Figure 5B), in order to vary the orientation of the segregation of the material to be loaded. The rotation of the hopper 1 is controlled according to manual or automatic modes (in the latter case according to predetermined logics).

Furthermore, by opening the valve 11 with double plate 11', 11", the limestone can be introduced into the vat 20. The segregation, at this point, will balance the previous limestone loading, so homogenizing the material distribution along the height of the vat 20.

The use of the valve 11 with double plate 11', 11" has the advantage of allowing the alternative opening of the one or the other plate 11', 11", so that the material can be introduced with a different trajectory within the furnace, so making its distribution more uniform, as shown in Figure 5C.In particular, each plate 11', 11"can rotate at an angle α between 0° and 120°.

Furthermore, the opening angle α of the pair of plates 11', 11" is controlled by means of suitable inclination meters 16 and, therefore, the plates 11', 11" can be opened according to a desired angle for generating different trajectory jets of limestone pieces, according to their size.

The system 100 is also advantageously used in a lime kiln with two vats 20, 20', provided with a linear translation system, as schematically shown in Figure 6.

Similarly to what has been described with respect to the furnace 20, the material is introduced through a conveying slide 23 into the hopper 1, by means of a limestone lifting system.

Advantageously, sealing bellows 13d can be installed, positioned both at the upper inlet and at the lower inlet of the hopper 1, in order to prevent the dust from escaping. The bellows 13, controlled by oleo-dynamic cylinders or a pneumatic system, are placed in an extended configuration in order to seal the counterparts installed on the furnace vat 20, 20', for example a valve 29 which is necessary for keeping the furnace under pressure, to prevent the powder escaping from the hopper 1 and from the underlying double-plate valve 11, during loading and unloading phases of limestone. The same bellows 13, however, are retracted once the loading phase is ended, to prevent them from rubbing and interfere with the rotational and translational movement of the hopper 1 itself.

In the case of a furnace with two vats 20, 20', the hopper 1, provided as said with the first motor-geared reducer 6 in order to rotate around its axis, and with a rack-and-pinion system 26 installed on the support structure of the furnace, so as to cooperate with the pair of pinions 8 of the system 100, is positioned on a first vat 20 of the lime kiln. When the hopper 1 is aligned with the first vat 20 and possibly has been rotated on itself according to a desired angle, the sealing bellows13 are extended on the upper side against dedicated sealing plates (such plates are installed on the surrounding structure, being part of the furnace and are not closely linked to the conveying system) and, on the lower side, against the valve necessary for pressure sealing of the furnace 29. At this point, the sealing valve of the furnace 29 can be opened. When the sealing valve 29 is completely open, the valve 11 with double plate 11', 11"is also open to load the limestone in pieces inside the vat 20 of the furnace.

Also in this double vat configuration, the valve 11 with double plates 11', 11" can be opened with various angles, in order to allow a loading of limestone distributed into the vat.

In the next cycle, the hopper 1 due to the rack-and-pinion handling system 26, can load a second vat 20' of the regenerative lime kiln, according to the methods already described for the first vat 20.

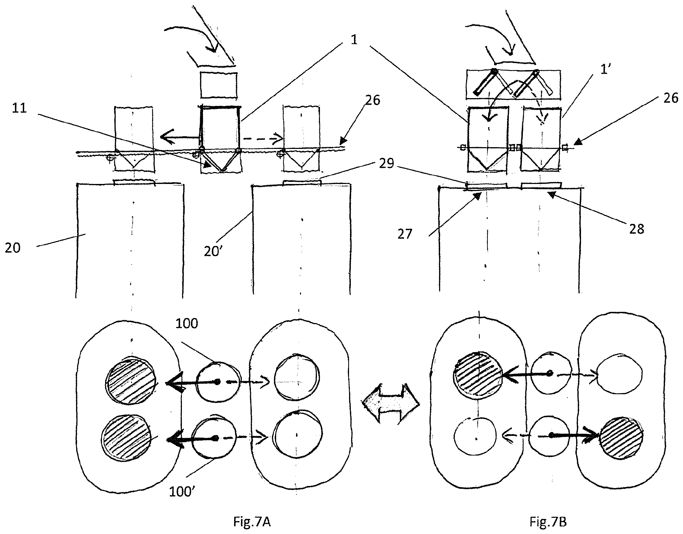

According to an alternative configuration, the present system 100, as shown in Figures 7A and 7Ba is used as a lime kiln with two vats 20, 20', equipped with a double inlet 27, 28 of the limestone in each vat. Similarly to what described for the single inlet of the double vat furnace, through a lifting system of the material limestone is introduced through a conveying slide 23 and through the diverter valve 11 with double plate 11', 11''. The limestone required for an operating cycle of a regenerative lime kiln with double vat is divided and conveyed to a first hopper 1 and subsequently to a second hopper 1'.

According to the present invention and as seen from the drawings of Figures 7A and 7B, the two hoppers 1 and 1' move on one or both vats 20, 20' following two modes: the hoppers 1 and 1' move simultaneously, by means of a rack-and-pinion transmission, onto the same vat 20, so loading the quantity of limestone necessary for a cooking cycle of the furnace, in the same vat, distributed according to the procedure shown in Figures 5A, 5B, 5C; otherwise the hopper 1 moves either towards the vat 20 (or the vat 20' following the sequence of the operating cycle of the lime kiln with double vat), by loading half amount of limestone required for a cooking cycle of the furnace, in accordance with the procedure described in Figures 5A, 5B, 5C, and the hopper 1' moves simultaneously towards the opposite vat, by loading half the amount of limestone required for a cooking cycle of the furnace, according to the procedure described in Figures 5A, 5B, 5C.

Advantageously, through the use of motors completed with encoder and controlled by inverter, all movements are precise and constantly monitored.

In addition, due to the complete configuration of the driver, the torque control and the speed of the movement are managed in a dynamic and flexible way.

In addition to the embodiment of the invention described above, it must be understood that many further variants exist. It must also be understood that such embodiments are only exemplary and limit neither the object of the invention nor its applications, nor its possible configurations. On the contrary, although the above description makes it possible for a technician to implement the present invention according to at least one of its exemplary configurations, it must be understood that numerous variants are conceivable of the described components, without for this reason abandoning the object of the invention, as defined in the attached claims

## Claims

1. System (100) for conveying and distributing limestone in pieces, suitable for use in vertical lime kilns, with at least one vat (20, 20'), comprising:
- a hopper (1) for receiving limestone in pieces,
- a support structure (3) provided with wheels for linear displacement on a rail (4), by which the hopper (1) is fixed by means of a thrust bearing (5),
- two geared motors (6, 7) allowing the movement of the hopper (1),
- a valve (11) provided with a pair of plates (11', 11") connected to the lower portion of the hopper (1), said pair of plates (11', 11") in the valve closing position being arranged in such a way, that their distal ends, with respect to the valve (11), are in contact with each other;
- a pair of sealing bellows (13), positioned both at one inlet and at one outlet of the hopper (1),
such system (100) being **characterized in that**
- the first geared motor (6) is configured to allow a rotation of the hopper (1) around a vertical axis of an angle (β) between 0° and 180° thereof by means of a toothed coupling (8) and **in that**
in the opening step of the valve (11) at least one plate (11', 11") assumes an opening angle (α) between 0° and 120° around a fulcrum coinciding with its proximal end with respect to the valve (11)
in order to guarantee a homogeneous distribution of the limestone in pieces within the volume of at least one vat (20, 20') of the vertical lime kiln and **in that**
the hopper (1) for receiving the material is internally coated with impact-resistant rubber polyurethane panels.

2. System (100) according to claim 1, wherein said second geared motor (7) is configured for performing a linear movement of the hopper (1) along a rack (26).

3. System (100) according to one of the preceding claims, further comprising a pair of limit switches for checking the "zero" position of the hopper (1).

4. Method for conveying and distributing limestone in pieces, into a lime kiln by means of the system according to claims 1 to 3, cyclically comprising the following steps:
a. lifting the limestone in pieces atop of the lime kiln, by means of a bucket of a lifting system (22) or a conveyor belt or a bucket elevator,
b. loading the material through a conveying slide (23) into the hopper (1),
c. rotating at least one plate (11', 11") of a valve (11) provided with a pair of plates and discharging the material from the hopper (1) into a vat (20) of the lime kiln,
and **characterized in that** after each cycle comprising the steps a., b., c., a rotation of the hopper (1) is performed around one of its vertical axis, with a predefined angle (β), and an opening of at least one plate (11', 11") of the valve (11) according to a predetermined angle (α)
and **in that** said angle (β) assumes values between 0° and 180° and said angle (α) assumes values between 0° and 120°.

5. Method according to claim 4, wherein the opening angle (α) of the pair of plates (11', 11") of the valve (11) is controlled by means of a pair of inclination meters (16).

6. Method according to any of claims 4 or 5, wherein said method is also implemented for a second vat (20') of the lime kiln, by means of the displacement of the system (100) for conveying and distributing limestone on said second vat (20') through a rack (26).

7. Method according to any of claims from 4 to 6, wherein said method is implemented for a pair of vats (20, 20') of the lime kiln, each vat (20, 20') being provided with a double inlet (27, 28) by means of the simultaneous displacement of a pair of conveying and distributing systems (100), either to the same vat (20, 20') or to opposed vats (20, 20').

## Patentansprüche

1. System (100) zum Fördern und Verteilen von Kalksteinbrocken, geeignet für den Einsatz in vertikalen Kalköfen, mit mindestens einem Bottich (20, 20'), umfassend:
- einen Trichter (1) zur Aufnahme der Kalksteinbrocken,
- eine Stützstruktur (3), die mit Rädern versehen ist, die sich linear auf einer Schiene (4) bewegen, mittels derer der Trichter (1) mittels eines Drucklagers (5) befestigt ist,
- zwei Getriebemotoren (6, 7), die die Bewegung des Trichters (1) ermöglichen,
- ein Ventil (11), das mit einem Plattenpaar (11', 11") versehen und mit dem unteren Teil des Trichters (1) verbunden ist, wobei das Plattenpaar (11', 11") in der geschlossenen Position des Ventils derart angeordnet ist, dass seine distalen Enden in Bezug auf das Ventil (11) miteinander in Kontakt sind;
- ein Paar Dichtungsbälge (13), die beide an einem Einlass und an einem Auslass des Trichters (1) positioniert sind,
wobei das System (100) ist **dadurch gekennzeichnet, dass**
- der erste Getriebemotor (6) so konfiguriert ist, dass er die Drehung des Trichters (1) um eine vertikale Achse gemäß einem Winkel (β) zwischen 0° und 180° mittels einer Zahnverbindung (8) ermöglicht und während des Öffnungsvorgangs des Ventils (11) nimmt mindestens eine Platte (11', 11") einen Öffnungswinkel (α) zwischen 0° und 120° um einen Drehpunkt ein, der mit seinem proximalen Ende bezüglich des Ventils (11) so zusammenfällt, um eine homogene Verteilung des Kalksteins in Brocken innerhalb des Volumens von mindestens einem Bottich (20, 20') des vertikalen Kalkofens zu gewährleisten, und dass
der Trichter (1), der das Material aufnehmen soll, innen mit schlagbeständigen Polyurethan-Gummiplatten überzogen.

2. System (100) nach Anspruch 1, wobei der zweite Getriebemotor (7) konfiguriert ist, um zu bewirken, dass der Trichter (1) eine lineare Bewegung entlang einer Bahn (26) ausführt.

3. System (100) nach einem der vorangehenden Ansprüche, ferner ein Paar Endschalter umfassend, um die "Null"-Position des Trichters (1) zu überwachen.

4. Verfahren zum Fördern und Verteilen von Kalkstein in Brocken in einem Kalksteinofen mittels des Systems nach den Ansprüchen 1 bis 3, zyklisch die folgenden Arbeitsgänge umfassend:
a. Anheben des Kalksteins in Brocken bis auf die Oberseite des Kalksteinofens mittels eines Bechers eines Hebesystems (22) oder eines Förderbands oder eines Becherwerks,
b. Laden des Materials durch einen Transportschieber (23) in den Trichter (1),
c. Drehen des mindestens einer Platte (11', 11") eines Ventils (11), das mit einem Plattenpaar ausgestattet ist, und Evakuierung des Materials aus dem Trichter (1) in einen Bottich (20) des Kalksteinofens,
**dadurch gekennzeichnet, dass** nach jedem Zyklus, der die Arbeitsschritte a., b., c. umfasst, wird eine Drehung des Trichters (1) um eine seiner vertikalen Achsen mit einem vorbestimmten Winkel (β) und einer Öffnung von mindestens einer Platte (11', 11") des Ventils (11) entsprechend einem vorgegebenen Winkel (α), ausgeführt wird, und
dass der Winkel (β) Werte zwischen 0° und 180° annimmt und der Winkel (α) Werte zwischen 0° und 120° annimmt.

5. Verfahren nach Anspruch 4, wobei der Öffnungswinkel (α) des Plattenpaares (11', 11") des Ventils (11) mittels eines Neigungsmesserpaares (16) kontrolliert wird.

6. Verfahren nach einem der Ansprüche 4 oder 5, wobei das Verfahren auch für einen zweiten Bottich (20') des Kalksteinofens mittels einer Verschiebung des Systems (100) zum Fördern und Verteilen von Kalkstein auf dem zweiten Bottich (20) durch eine Bahn (26), durchgeführt wird.

7. Verfahren nach einem der Ansprüche 4 bis 6, wobei das Verfahren für ein Paar Bottiche (20, 20') des Kalksteinofens durchgeführt wird, wobei jeder Bottich (20, 20') mit einem doppelten Eingang (27, 28) durch die gleichzeitige Bewegung eines Paares von Förder- und Verteilungssystemen (100) zu demselben Bottich (20, 20') oder zu gegenüberliegenden Bottichen (20, 20'), versehen ist.

## Revendications

1. Système (100) de transport et de distribution de mottes de calcaire, adapté à une utilisation dans des fours à chaux verticaux, avec au moins une cuve (20, 20'), comprenant :
- une trémie (1) pour recevoir les mottes de calcaire,
- une structure de support (3) munie de roues à déplacement linéaire sur un rail (4), au moyen de laquelle la trémie (1) est fixée au moyen d'un palier de butée (5),
- deux motoréducteurs (6, 7) qui permettent le déplacement de la trémie (1),
- une vanne (11) munie d'une paire de plaques (11', 11") reliées à la partie inférieure de la trémie (1), ladite paire de plaques (11', 11") étant disposée en position fermée de la vanne de telle sorte que leur extrémités distales, par rapport à la vanne (11), sont en contact l'une avec l'autre;
- une paire de soufflets d'étanchéité (13), tous deux positionnés sur une entrée et sur une sortie de la trémie (1),
ledit système (100) étant **caractérisé en ce que**
- le premier motoréducteur (6) est configuré de manière à permettre la rotation de la trémie (1) autour d'un axe vertical selon un angle (β) compris entre 0° et 180°, au moyen d'un joint denté (8), et que
lors de l'opération d'ouverture de la vanne (11), au moins une plaque (11', 11") forme un angle d'ouverture (α) compris entre 0° et 120° autour d'un point d'appui coïncidant avec son extrémité proximale par rapport à la vanne (11) afin de garantir une répartition homogène du calcaire en mottes dans le volume d'au moins une cuve (20, 20') du four à calcaire vertical et que la trémie (1) destinée à recevoir le matériau est garnie intérieurement de panneaux en caoutchouc de polyuréthane résistant aux chocs.

2. Système (100) selon la revendication 1, dans lequel ledit deuxième motoréducteur (7) est configuré pour faire effectuer à la trémie (1) un mouvement linéaire le long d'une piste (26).

3. Système (100) selon l'une des revendications précédentes, comprenant en outre une paire d'interrupteurs de fin de course pour contrôler la position "zéro" de la trémie (1).

4. Procédé de transport et de distribution de calcaire en mottes dans un four à calcaire au moyen du système selon les revendications 1 à 3, comprenant cycliquement les opérations suivantes :
a. levage du calcaire en mottes jusqu'au sommet du four à calcaire, au moyen d'un godet d'un système de levage (22) ou d'un tapis roulant ou d'un élévateur à godets,
b. chargement du matériau à travers un coulisseau de transport (23) dans la trémie (1),
c. rotation d'au moins une plaque (11', 11") d'une vanne (11) équipée d'une paire de plaques et évacuation du matériau de la trémie (1) dans une cuve (20) du four à calcaire,
**caractérisé en ce qu'**après chaque cycle comprenant les opérations a., b., c., une rotation de la trémie (1) est effectuée autour de l'un de ses axes verticaux, avec un angle prédéterminé (β), et une ouverture d'au moins une plaque (11', 11") de la vanne (11) selon un angle prédéterminé (α)
et que ledit angle (β) prend des valeurs comprises entre 0° et 180° et ledit angle (α) prend des valeurs comprises entre 0° et 120°.

5. Procédé selon la revendication 4, dans lequel l'angle d'ouverture (α) de la paire de plaques (11', 11") de la vanne (11) est contrôlé au moyen d'une paire de jauges d'inclinaison (16).

6. Procédé selon l'une des revendications 4 ou 5, dans lequel ledit procédé est également réalisé pour une deuxième cuve (20') du four à calcaire, par le déplacement due système (100) de transport et de distribution de calcaire sur ladite deuxième cuve (20') à travers une piste (26).

7. Procédé selon l'une des revendications 4 à 6, dans lequel ledit procédé est mis en oeuvre pour une paire de cuves (20, 20') du four à calcaire, chaque cuve (20, 20') étant pourvue d'une double entrée (27, 28) au moyen du déplacement simultané d'une paire de systèmes de transport et de distribution (100), vers la même cuve (20, 20') ou vers des cuves opposées (20, 20').
